(19) Europäisches Patentamt

European Patent Office

Office européen des brevets

(11) **EP 1 625 039 B1**

(12) **EUROPÄISCHE PATENTSCHRIFT**

(45) Veröffentlichungstag und Bekanntmachung des Hinweises auf die Patenterteilung:
**01.10.2008   Patentblatt 2008/40**

(21) Anmeldenummer: **04741508.8**

(22) Anmeldetag: **04.05.2004**

(51) Int Cl.:
*B60K 23/08* *(2006.01)*    *B60K 23/04* *(2006.01)*

(86) Internationale Anmeldenummer:
**PCT/EP2004/050696**

(87) Internationale Veröffentlichungsnummer:
**WO 2004/098939 (18.11.2004 Gazette 2004/47)**

(54) **VERFAHREN UND VORRICHTUNG ZUM REGELN DER FAHRDYNAMIK EINES FAHRZEUGS**

METHOD AND DEVICE FOR REGULATING THE DRIVING DYNAMICS OF A VEHICLE

PROCEDE ET DISPOSITIF POUR REGULER LA DYNAMIQUE D'UN VEHICULE

(84) Benannte Vertragsstaaten:
**DE FR**

(30) Priorität: **08.05.2003   DE 10320804**

(43) Veröffentlichungstag der Anmeldung:
**15.02.2006   Patentblatt 2006/07**

(73) Patentinhaber: **Continental Teves AG & Co. oHG
60488 Frankfurt am Main (DE)**

(72) Erfinder:
• **LÜDERS, Ulrich
31303 Burgdorf (DE)**
• **OEHLER, Rainer
64295 Darmstadt (DE)**
• **RASTE, Thomas
61440 Oberursel (DE)**
• **RAITZ VON FRENTZ, Hubertus
65936 Frankfurt (DE)**

(56) Entgegenhaltungen:
**EP-A- 1 162 101        DE-A- 19 721 299**

EP 1 625 039 B1

**Beschreibung**

Die Erfindung betrifft ein Verfahren zum Regeln der Fahrdynamik eines Fahrzeugs, bei dem wenigstens ein Rad des Fahrzeugs aufgrund einer Steuerung einer ein Drehmoment an das Rad übertragenden Kupplung und/oder aufgrund einer Steuerung eines Drehmoments auf das Rad und wenigstens auf ein weiteres Rad verteilenden Differenzials mit einem Drehmoment beaufschlagt wird.

Die Erfindung betrifft zudem eine Vorrichtung zum Regeln der Fahrdynamik eines Fahrzeugs, beinhaltend wenigstens einen Aktuator zum Steuern einer das Drehmoment an ein Rad des Fahrzeugs übertragenden Kupplung und/oder wenigstens einen Aktuator zum Steuern eines Drehmoments auf Räder des Fahrzeugs verteilenden Differenzials.

Aus dem Stand der Technik ist es bekannt, elektronisch ansteuerbare Elemente in den Antriebsstrang eines Fahrzeugs einzubringen, um die Antriebskraft gezielt auf einzelne Räder zu verteilen. Bekannte Möglichkeiten zur Steuerung eines auf ein Rad
übertragenes Drehmoment reichen von einer Steuerung sperrbarer Differenziale an einer angetriebenen Achse des Fahrzeugs bis hin zu einer radindividuellen Drehmomentverteilung bei allradgetriebenen Fahrzeugen.

Ein gattungsgemäßes Verfahren und eine gattungsgemäße Vorrichtung gehen beispielsweise aus der deutschen Offenlegungsschrift DE 198 00 327 A1 hervor. Diese betrifft ein Antriebskraft-Steuersystem in einem vierradgetriebenen Fahrzeug, bei dem das maximal auf ein linkes und rechtes Rad durch eine linke und rechte Kupplung übertragene Drehmoment mit zunehmender Fahrzeuggeschwindigkeit geringer gestellt wird. Zudem ist ein hinteres Differenzial in der Lage, eine Differenz zwischen Eingriffskräften der linken und rechten Kupplung zu erzeugen, um die Lenkcharakteristik des Fahrzeugs zu steuern und insbesondere eine Über- oder Untersteuertendenz des Fahrzeuges zu beseitigen. Diese wird anhand eines Vergleichs einer berechneten Bezugsgierrate mit einer erfassten momentanen Gierrate des Fahrzeugs erkannt.

Die internationale Patentanmeldung WO 02/09965 A1 offenbart ein weiteres gattungsgemäßes Verfahren und eine weitere gattungsgemäße Vorrichtung, bei denen Drehgeschwindigkeiten einzelner Räder durch den Fahrer eingeleiteten Fahrmanövern angepasst werden, die anhand von durch Sensoren erfassten Werte von Fahrzustandsgrößen erkannt werden. Zur Steuerung der Drehgeschwindigkeiten werden Differenziale verwendet.

Die EP 1162101 nächstliegender bekanntes Stand der Technik offenbart ein System für die aktive Steuerung eines Kraftfahrzeugdifferentialgetriebes, das umfasst eine Antriebswelle, die dazu bestimmt ist, ein Drehmoment auf zwei Abtriebswellen oder Halbwellen, die jeweils verschieden Rädern des Kraftfahrzeuges zugeordnet sind, zu übertragen. Des Weiteren sind Kupplungsmittels, die mittels entsprechender Aktuatoren selektiv steuerbar sind, um die Aufteilung des Drehmomentes zwischen den Halbwellen zu modifizieren und Generatormittel, die dazu ausgelegt sind, Signale zu liefern, welche einen Winkel der Drehung des Lenkrads, die Geschwindigkeit des Fahrzeuges, die Giergeschwindigkeit des Fahrzeuges sowie die Längsbeschleunigung und die Querbeschleunigung des Fahrzeuges angeben.

Durch Eingriffe in den Antriebsstrang, wie sie beispielsweise bei den genannten Verfahren und Vorrichtungen vorgenommen werden, wird das Fahrzeugfolgeverhalten in vielen Fahrsituationen erheblich verbessert. Insbesondere eine Verringerung einer Neigung zum Untersteuern, wie sie durch eine gezielte Verteilung vom Drehmoment auf einzelne Räder erreicht werden kann, führt zu direkteren Fahrzeugreaktionen und damit zu einer erhöhten Sicherheit, insbesondere bei Ausweichmanövern, sowie zu einer Erhöhung des von dem Fahrer empfundenen Fahrspaßes.

Die bekannten Verfahren haben jedoch den Nachteil, dass physikalische Grenzen eines stabilen Fahrverhaltens nicht oder nur unzureichend berücksichtigt werden und die Regeleingriffe den Fahrer im fahrdynamischen Grenzbereich nicht oder nur unzureichend unterstützen, Ein in sicherheitskritischen Fahrzuständen in die Fahrdynamikregelung eingreifendes ESP-Systeir zur Durchführung eines elektronischen Stabilitätsprogramms (ESP) wird für den Fahrer oft unvermutet und unkomfortabel aktiv.

Der vorliegenden Erfindung liegt daher die Aufgabe zugrunde, eine sichere und zuverlässige Unterstützung des Fahrers eines Fahrzeugs anhand von Eingriffen in den Antriebsstrang zu gewährleisten und dabei insbesondere physikalische Grenzen zu berücksichtigen.

Erfindungsgemäß wird diese Aufgabe durch ein Verfahren nach dem Patentanspruch 1 gelöst.

Erfindungsgemäß wird diese Aufgabe zudem durch eine Vorrichtung nach dem Patentanspruch 8 gelöst.

Vorteilhafte Weiterbildungen des Verfahrens sind Gegenstand der Unteransprüche 1 bis 7.

Die Erfindung sieht dabei insbesondere vor, dass ein Verfahren zum Regeln der Fahrdynamik eines Fahrzeugs, bei dem wenigstens ein Rad des Fahrzeugs aufgrund einer Steuerung einer das Drehmoment an das Rad übertragenden Kupplung und/oder aufgrund einer Steuerung eines Drehmoments auf das Rad und wenigstens ein weiteres Rad verteilenden Differenzials mit einem Drehmoment beaufschlagt wird, so durchgeführt wird, dass ein Wert des Drehmoments in Abhängigkeit eines ersten und eines zweiten Wertes eines Giermoments bestimmt wird, wobei der erste Wert des Giermoments in Form eines einen Sollwert einer Gierrate erzeugenden Wertes des Giermoments anhand eines Fahrzeugreferenzmodell ermittelt wird und der zweite Wert des Giermomentes in Abhängigkeit einer Regelabweichung zwischen dem Sollwert der Gierrate und einem erfassten Istwert der Gierrate sowie in Abhängigkeit einer Regelabweichung zwischen einem Sollwert und einem Istwert einer weiteren, von der Gierrate verschiedenen Fahrzustandsgröße bestimmt wird.

Die Erfindung schafft damit ein vorteilhaftes Verfahren, das Fahrzeug durch Eingriffe in den Antriebsstrang, die in Form einer Steuerung wenigstens einer Kupplung und/oder eines Differenzials vorgenommen werden, mit einem eine Sollgierrate erzeugenden Giermoment zu beaufschlagen.

Das Verfahren zeichnet sich dabei dadurch aus, dass Regeleingriffe als Kombination einer Vorsteuerung und einer Rückkopplung vorgenommen werden, so dass eine sehr schnelle, zuverlässige und sichere Regelung durchgeführt werden kann.

Das erfindungsgemäße Verfahren erhöht somit die Fahrstabilität eines Fahrzeugs insbesondere in kritischen Fahrsituationen im fahrdynamischen Grenzbereich in hohem Maße. Es hebt sich damit von bekannten Verfahren ab, die zur Erhöhung der Agilität beitragen, jedoch den Fahrer in kritischen Fahrsituationen nur unzureichend unterstützen.

Die erfindungsgemäßen Eingriffe können die Bremsen- und Motoreingriffe eines ESP-Systems ergänzen oder ersetzen, so dass die ESP-Regeleingriffe weitaus seltener vorgenommen werden müssen, als dies ohne die erfindungsgemäßen Eingriffe der Fall wäre. Damit werden Sicherheit und Fahrkomfort im physikalischen Grenzbereich deutlich verbessert.

Durch das der Vorsteuerung zugrunde liegende Fahrzeugreferenzmodell wird ein Wunschverhalten des Fahrzeugs dabei besonders gut berücksichtigt. Die Rückkopplung erlaubt es besonders vorteilhaft, eine kombinierte Regelung mehrerer Fahrzustandsgrößen vorzunehmen.

Zur Vorsteuerung wird vorteilhaft ein eine Sollgierrate erzeugendes Giermoment in einem Fahrzeugreferenzmodells berechnet, bei dem es sich zweckmäßigerweise um ein inverses Fahrzeugmodell handelt.

Die Sollgierrate wird dabei vorzugsweise in Abhängigkeit von durch den Fahrer eingestellten Größen, wie beispielsweise der von dem Fahrer an wenigstens einem lenkbaren Rad des Fahrzeugs eingestellten Lenkwinkel und die vom Fahrer eingestellte Fahrzeuggeschwindigkeit, bestimmt, so dass die Sollgierrate der von dem Fahrer gewünschten Gierrate entspricht.

Vorzugsweise wird innerhalb des Fahrzeugreferenzmodells ein Reibungskoeffizient des Untergrundes berücksichtigt wird. Dies erlaubt es, insbesondere im fahrdynamischen Grenzbereich eine sehr sichere und zuverlässige Fahrdynamikregelung durchzuführen.

In einer bevorzugten Durchführungsform des Verfahrens wird daher eine Erkennung des Reibungskoeffizienten durchgeführt.

Bei der Rückkopplung wird in einer bevorzugten Durchführungsform des Verfahrens neben der Regelabweichung der Gierrate des Fahrzeugs eine Regelabweichung eines Schräglaufwinkels und/oder eines Längsschlupfes wenigstens eines Rades des Fahrzeugs berücksichtigt.

Hierdurch ist eine Regelung verschiedener wichtiger Fahrzustandsgrößen gegeben, so dass die Fahrstabilität des Fahrzeugs vor allem in kritischen Fahrsituationen weiter verbessert wird.

Ein Eintritt in die Regelung findet in einer weiteren bevorzugten Durchführungsform des Verfahrens dann statt, wenn eine sicherheitskritische Fahrsituation erkannt wird.

Dabei wird eine kritische Fahrsituation vorzugsweise dann erkannt, wenn ein Wert wenigstens einer Fahrzustandsgröße einen vorgegebenen ersten Schwellenwert überschreitet.

Der Regeleingriff kann beendet werden, wenn die kritische Fahrsituation überwunden ist. Zweckmäßigerweise wird dabei anhand eines Unterschreitens eines zweiten Schwellenwertes durch einen Wert wenigstens einer Fahrzustandsgröße erkannt, dass kein kritischer Fahrzustand mehr vorliegt.

Vorteilhaft können sicherheitskritische Fahrsituationen insbesondere anhand eine Wertes eines Handling-Potenzials erkannt werden, in dem Informationen über die, ausgehend von momentanen Fahrzustand, noch aufbaubare Seitenführungskraft eines Rades enthalten sind.

Die Seitenführungskraft an einem Rad des Fahrzeugs wird infolge eines Schräglaufwinkels des Rades erzeugt. Sie steigt dabei zunächst mit zunehmendem Schräglaufwinkel bis zu einem Maximalwert an und nimmt mit weiter zunehmendem Schräglaufwinkel wieder leicht ab.

Es kann somit ein Schräglaufwinkel-Ausnutzungsgrad bestimmt werden, der für Schräglaufwinkel eines Rades, die kleiner als der dem Maximalwert der Seitenführungskraft zugeordnete Schräglaufwinkel sind, dem Verhältnis zwischen dem vorliegenden Wert des Schräglaufwinkels und seinem zu dem Maximalwert der Seitenführungskraft gehörenden Wert definiert ist und für Schräglaufwinkel, die größer als der den Maximalwert der Seitenführungskraft zugeordnete Schräglaufwinkel sind, den Wert Eins annimmt.

Das Handling-Potenzial wird von dem Schräglaufwinkelausnuzungsgrad abgeleitet.

Neben dem beschriebenen Verfahren schafft die Erfindung ebenso eine vorteilhafte Vorrichtung, die zur Durchführung des Verfahrens geeignet ist.

Die Vorrichtung zum Regeln der Fahrdynamik eines Fahrzeugs mit wenigstens einem Aktuator zum Steuern einer ein Drehmoment an ein Rad des Fahrzeugs übertragenden Kupplung und/oder wenigstens einen Aktuator zum Steuern eines Drehmoments auf Räder des Fahrzeugs verteilenden Differenzial zeichnet sich insbesondere dadurch aus, dass sie eine Vorsteuereinheit zum Ermitteln eines ersten eine Sollgierrate erzeugenden Giermoments, eine Regeleinheit zum Ermitteln einer zweiten Gierrate in Abhängigkeit einer Regelabweichung zwischen der Sollgierrate und einer erfassten Istgierrate sowie in Abhängigkeit einer Regelabweichung zwischen einem Sollwert und einem Istwert einer weiteren, von einer Gierrate verschiedenen Fahrzustandgröße und eine Steuereinheit zum Steuern der Aktuatoren in Abhängigkeit eines anhand des ersten und des zweiten Giermoments ermittelten Drehmoments sowie eine Aktivierungslogik zum Aktivieren der Steuereinheit in Abhängigkeit eines Vergleichs zwischen einer Regelabweichung wenigstens einer Fahrzustandgröße und einem vorgegebenen Schwellenwert aufweist.

Weitere Vorteile und zweckmäßige Weiterbildungen der Erfindung ergeben sich aus den Unteransprüchen und der folgenden Beschreibung bevorzugter Ausführungsbeispiele anhand der Figuren.

Von den Figuren zeigt

Fig. 1a      eine Ausführungsform eines Antriebsstrangs eines vierrädrigen Fahrzeugs

Fig. 1b      eine weitere Ausführungsform eines Antriebsstrangs eines vierrädrigen Fahrzeugs

Fig. 1c      eine noch weitere Ausführungsform eines An-, triebsstrangs eines vierrädrigen Fahrzeugs,

Fig. 2      eine Veranschaulichung einer Fahrdynamikregelung anhand eines Blockschaltbildes mit einem Fahrzeugregler und weiteren Komponenten,

Fig. 3      ein Blockschaltbild eines FahrzeugsreglerAnteils zur Schwimmwinkel- und Reibwertbestimmung,

Fig. 4      ein Blockschaltbild eines FahrzeugreglerAnteils zur Antriebsstrangregelung,

Fig. 5      ein Diagramm mit einer SeitenführungskraftSchräglaufwinkel-Kennlinie,

Fig. 6      eine Skizze eines Einspurmodells mit verschiedenen eingetragenen Größen,

Fig. 7      ein Blockschaltbild einer Einheit zur Giermoment-Vorsteuerung,

Fig. 8      ein Blockschaltbild eines Giermoment-Reglers,

Fig. 9      ein Blockdiagramm einer Aktivierungslogik,

Fig. 10      ein Blockdiagramm eines Antriebsstrangreglers,

Fig. 11a      eine Veranschaulichung eines Fahrmanövers,

Figur 11b      Diagramme mit einer Auswertung des ohne erfindungsgemäße Regeleingriffe durchgeführten Fahrmanövers.

Figur 11c      Diagramme mit einer Auswertung des mit erfindungsgemäßen Regeleingriffe durchgeführten Fahrmanövers,

Es wird von einem durch einen Motor angetriebenen Fahrzeug ausgegangen, dass beispielsweise zwei Achsen mit jeweils zwei Rädern aufweist. Über geeignete Antriebswellen und deren Verbindungen sind die Räder an einer der Achsen oder die Räder an beiden mit dem Motor verbunden und antreibbar. Bei zweiradgetriebenen Fahrzeugen können dabei sowohl die Räder an der Hinterachse als auch die Räder an der Vorderachse angetrieben sein.

Zur Durchführung des erfindungsgemäßen Verfahrens werden steuerbare Elemente in den Antriebsstrang des Fahrzeugs eingebracht und, vorzugsweise elektronisch, gesteuert. Bei diesen Elementen kann es sich beispielsweise um elektrohydraulische oder elektromagnetische Kupplungen oder um elektrisch sperrbare Differenziale handeln. Diese werden typischerweise jedoch ebenfalls mit Hilfe von Kupplungen gesteuert, so dass im Folgenden alle in den Antriebsstrang eingreifenden Elemente als Kupplungen bezeichnet werden können.

Die Kupplungen sollen im Schlupf betrieben werden können, damit ein durch sie übertragenes Drehmoment dosierbar ist. Geeignete Kupplungen sind beispielsweise Haldex-Kupplungen oder auch einfache Trockenkupplungen.

Erfindungsgemäß wird durch eine Steuerung des durch die Kupplungen übertragenen Drehmoments ein Giermoment $\overline{T}_{Req,Kupplung}$ erzeugt, welches die Gierrate $\Psi$ des Fahrzeugs einer vorgegebenen Sollgierrate angleicht. Dabei ist insbesondere die bei dem Fahrzeug vorliegende Ausgestaltung des Antriebsstrangs zu berücksichtigen.

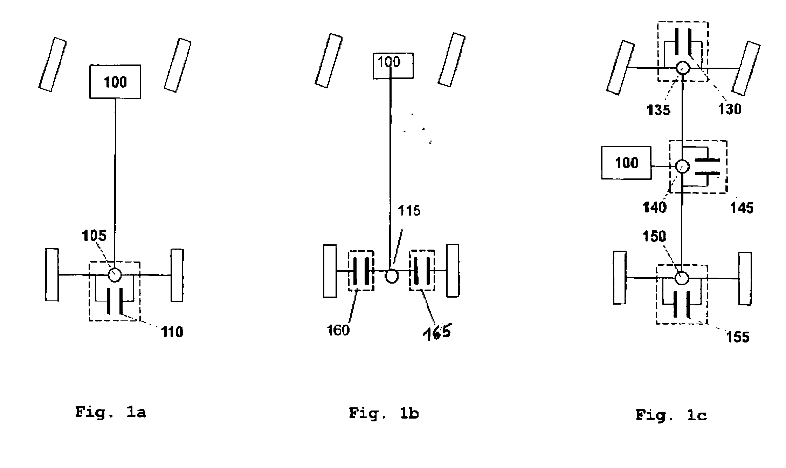

Verschiedenen Ausführungformen des Antriebsstrangs für ein zweiachsiges, vierrädriges Fahrzeug sind in den Figuren 1a, 1b und 1c dargestellt.

Insbesondere stellt Figur 1a einen Antriebsstrang mit einer durch einen Motor 100 angetriebenen Hinterachse dar. Ein linker und ein rechter Teil der Hinterachse sind dabei durch ein Differenzial 105 miteinander verbunden, das mit Hilfe einer Kupplung 110 gesperrt werden kann.

Bei der in der Figur 1b dargestellten Ausführungform des Antriebsstrangs werden beide Achsen des Fahrzeugs durch den Motor 100 angetrieben, wobei Drehzahlunterschiede der Vorderräder durch ein nicht steuerbares Differenzial ausgeglichen werden nicht eingezeichnet. Die mit den rechten und linken Hinterrädern verbundenen Ausgangswellen an der Hinterachse des Fahrzeugs sind durch eine rechte Kupplung 165 und eine linke Kupplung 160 mit einer die Antriebskraft des Motors übertragenden Kardanwelle verbunden.

In einer weiteren, in der Figur 1c dargestellten Ausgestaltung kann der Antriebstrang über eine angetriebene Vorderachse mit einem durch eine Kupplung 130 sperrbaren Differenzial 135, über eine angetriebene Hinterachse mit einem durch eine Kupplung 155 sperrbaren Differenzial 150 sowie über ein mittleres, einen Ausgleich zwischen dem Antriebsmoment an der Vorder- und Hinterachse herbeiführendes und durch eine Kupplung 145 sperrbares Differenzial 140 verfügen.

Die folgende Tabelle zeigt, wie die Kupplungen bei den in den Figuren gezeigten Ausführungsformen des Antriebsstrangs während einer Fahrt des Fahrzeugs durch eine Linkskurve zu steuern sind, um das Fahrzeug mit einem bestimmten Giermoment zu beaufschlagen. Bei der Steuerung muss berücksichtigt werden, ob das Fahrzeug durch einen Druck des Fahrers auf ein Fahrpedal beschleunigt wird (Fahrpedal » 0) oder die Geschwindigkeit des Fahrzeugs konstant ist (Fahrpedal = 0). In der Tabelle ist das Vorzeichen einer z-Komponente $T_{Req,Kupplung}$ des einzustellenden Giermoments $\overline{T}_{Req,Kupplung}$ angegeben, wobei mit der z-Richtung die Hochrichtung des Fahrzeugs gemeint ist. Im Folgenden werden dabei die Begriffe "Giermoment" und "z-Komponente eines Giermoments" synonym verwendet, da im Allgemeinen lediglich die z-Komponente eines Giermoments eines Fahrzeugs von Null verschieden ist.

Die Steuerungsmöglichkeiten umfassen eine dosierte Vorgabe des durch eine Kupplung übertragenen Drehmoments (x), ein Öffnen einer geschlossenen Kupplung (0). Ein eingeklammertes "x" zeigt an, dass eine geregelte Drehmomentvorgabe solange erfolgt, bis ein Bremseneingriff festgestellt wird, und die Kupplung dann geöffnet wird.

| Antriebstrang in Figur | | 1a | 1b | | 1c | | |
|---|---|---|---|---|---|---|---|
| Kupplung | | 110 | 165 | 160 | 130 | 145 | 155 |
| Fahrerpedal = 0 | $T_{Req,Kupplung} > 0$ | - | - | - | - | - | - |
| | $T_{Req,Kupplung} \leq 0$ | x | 0 | x | (x) | 0 | x |
| Fahrerpedal >> 0 | $T_{Req,Kupplung} > 0$ | 0 | 0 | x | 0 | x | 0 |
| | $T_{Req,Kupplung} \leq 0$ | x | x | 0 | (x) | 0 | x |

Das Symbol "-" in der Tabelle zeigt an, dass das angeforderte Giermoment nicht durch die Steuerung einer oder mehrerer Kupplungen erzeugt werden kann.

Im Hinblick auf eine Fahrdynamikregelung muss das Fahrzeug dabei während einer Fahrt durch die Linkskurve mit einem positiven bzw, negativen Giermoment $T_{Req,Kupplung}$ beaufschlagt werden, um ein Untersteuern bzw. ein Übersteuern zu bekämpfen.

Neben der Möglichkeit ein Giermoment durch Eingriffe in den Antriebsstrang eines Fahrzeugs zu erzeugen, besteht bekanntermaßen die Möglichkeit, Bremseneingriffe und Eingriffe in das Motormanagement zur Erzeugung eines Giermoments zu nutzen.

Hierauf basiert die Steuerung durch bekannte und heutzutage typischerweise in Fahrzeugen verwendete ESP-Systeme.

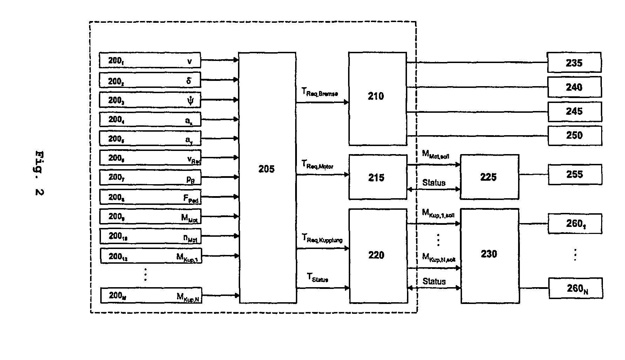

Es wird hier vorausgesetzt, dass das betrachtete Fahrzeug einen ESP-Regler besitzt. Ein Blockschaltbild des Regelungssystems ist in der Figur 2 dargestellt.

Es wird dabei insbesondere angenommen, dass es sich bei dem ESP-Regler um einen Fahrzeugregler 205 handelt, der in Abhängigkeit einer Abweichung zwischen einem erfassten Istwert einer Gierrate $\dot{\psi}$ und einem vorgegebenen Sollwert $\dot{\psi}_{ref}$ ein Giermoment zur Korrektur der Gierrate $\dot{\psi}$ berechnet, das sich aus einem durch Bremseneingriffe einzustellenden Anteil $T_{Req,Bremse}$, einem durch Motoreingriffe einzustellenden Anteil $T_{Req,Motor}$ und einem durch Eingriffe in den Antriebstrang einzustellenden Anteil $T_{Req,Kpplung}$ zusammensetzt.

Die Anteile werden an einen Bremsenregler 210, einen Motorregler 215 und einen Antriebsstrangregler 230 übermittelt.

Der Bremsenregler 210 berechnet anhand des ihm übermittelten Giermomentes $T_{Req,Bremse}$ Bremsdrücke für die Radbremse 235 am linken Vorderrad, die Radbremse 240 am rechten Vorderrad, die Radbremse 245 am linken Hinterrad sowie die Radbremse 250 am rechten Hinterrad und stellt diese Bremsdrücke mittels eines geeigneten Aktuators ein.

Der Motorregler 215 berechnet anhand des ihm übermittelten Giermomentes $T_{Reg,Motor}$ ein Solldrehmoment $M_{Mot,soll}$ für den Motor 255 des Fahrzeugs, das an eine Motorsteuereinheit 225 übergeben wird, die mittels geeigneter Aktuatoren entsprechende Eingriffe in den Motor 255 vornimmt und zudem diesen überwacht. Der Status des Motors wird dabei an den Motorregler 215 zurückgemeldet, um bei der Berechnung von $M_{Mot,soll}$ berücksichtigt zu werden.

Der Antriebsstrangregler 220 berechnet anhand des ihm übermittelten Giermomentes $T_{Req,Kupplung}$ Drehmomente $M_{Kup,1,soll}$, bis $M_{Kup,N,soll}$, die durch die Kupplungen $260_1$ bis $260_N$ übertragen werden sollen. Diese werden einer Antriebsstrangsteuereinheit 230 übergeben, welche die Kupplungen mittels geeigneter Aktuatoren entsprechend den vorgegebenen Momenten $M_{Kup,1,soll}$, bis $M_{Kup,N,soll}$ steuert. Dabei werden anhand der Drehmomente $M_{Kup,1,soll}$, bis $M_{Kup,N,soll}$ Soll-Sperrgrade oder Soll-Steifigkeiten von Kupplungen bzw. Differenzialen berechnet. Diese könnten selbstverständlich auch durch den Antriebsstrangregler 220 oder den Fahrzeugregler 205 berechnet werden. Es wird hier jedoch davon ausgegangen, dass die Schnittstelle zwischen den Einheiten 205 und 220 sowie insbesondere die Schnittstelle zwischen den Einheiten 220 und 230 so ausgeführt sind, dass ihnen ein Austausch von Drehmomenten zugrunde liegt.

Über die Schnittstellen zwischen den Einheiten 205, 220 und 230 werden ebenfalls Statusinformationen über den Status der Steuereinheit und vor allem der Kupplungen und der die Kupplungen steuernden Aktuatoren übermittelt.

Gemäß der Figur sind die Eingangsgrößen des Fahrzeugreglers 205 eine Fahrzeuglängsgeschwindigkeit v, ein Lenkwinkel δ an lenkbaren Rädern des Fahrzeugs, die Gierrate $\dot{\psi}$, eine Längsbeschleunigung $a_x$ des Fahrzeugs, eine Querbeschleunigung $a_y$ des Fahrzeugs, Radgeschwindigkeiten $V_{Rad}$ der einzelnen Räder des Fahrzeugs, Bremsdrücke $P_B$ in den einzelnen Radbremsen 235, 240, 245 und 250 des Fahrzeugs, die Fahrpedalstellung bzw. eine von dem Fahrer aufgebrachtePedalkraft $F_{P\,e,d}$ das Drehmoment $M_{Mot}$ des Motors 255 des Fahrzeugs, eine Drehzahl $n_{Mot}$ des Motors 255 sowie durch die Kupplungen $260_1$ bis $260_N$ übertragene Drehmomente $M_{Kup,1}$ bis $M_{Kup,N}$.

Die momentanen Istwerte dieser Größen werden durch geeignete Sensoren $200_1$ bis $200_M$, erfasst.

Die erfindungsgemäße Antriebsstrangregelung und die dafür verwendeten Einheiten werden im Folgenden näher beschrieben. Dies geschieht am Beispiel einer Regelung auf der Grundlage des in der Figur 1b dargestellten Antriebsstrangs

Zur Durchführung des erfindungsgemäßen Verfahrens verwendet der Fahrzeugregler 205 verschiedene erfasste oder aus erfassten Größen bestimmte Größen. Diese umfassen einen Schwimmwinkel β des Fahrzeugs, einen Reibungskoeffizienten μ des momentan vorliegenden Untergrundes, einen Schräglaufwinkel α der Hinterräder, einen Längsschlupf λ eines kurveninneren Vorderrades, einen Referenzschräglaufwinkel $\alpha_{ref}$, einen Referenzlängsschlupf $\lambda_{ref}$, die Referenzgierrate $\dot{\psi}_{ref}$, eine Regelabweichung Δα des Schräglaufwinkels α, eine Regelabweichung Δλ des Längsschlupfes λ, eine Regelabweichung $\Delta\dot{\psi}$, ein Handling-Potenzial$P_y$, einen Vorsteueranteil $T_{vorzteuer}$ des Giermomentes $T_{Req,Kupplung}$, einen Rückkopplungsanteil $T_{Regler}$ des Giermomentes $T_{Req,Kupplung}$, ein Signal $T_{vorsteuer,an/aus}$, ein Signal $T_{Reqler,an/aus}$ und ein Statussignal $T_{status}$.

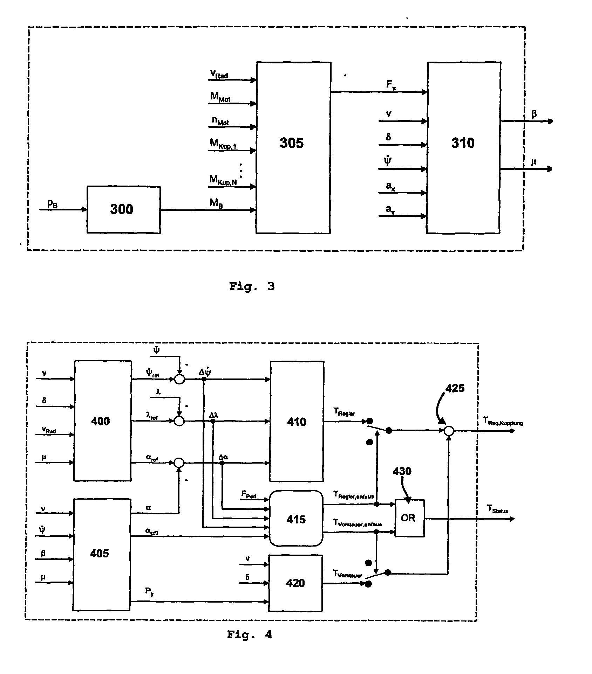

Ein Blockschaltbild eines Anteils des Fahrzeugreglers 205 zur Bestimmung des Schwimmwinkels β und des Reibungskoeffizienten μ ist in der Figur 3 dargestellt.

Dieser enthält eine Einheit 310 zur Berechnung des Schwimmwinkels β und des Reibwertes μ in Abhängigkeit einer auf das Fahrzeug wirkenden Längskraft $F_x$, der Fahrzeuglängsgeschwindigkeit v, des Lenkwinkels δ, der Gierrate $\dot{\psi}$, der Längsbeschleunigung $a_x$ und der Querbeschleunigung $a_y$. Die an das Fahrzeug angreifende Längskraft $F_x$ wird dabei durch die Einheit 305 bestimmt in Abhängigkeit der einzelnen Radgeschwindigkeiten $v_{Rad}$, dem Motordrehmoment $M_{Mot}$, der Motordrehzahl $n_{Mot}$, den Kupplungsmomenten $M_{Kup,1}$ bis $M_{Kup,N}$ und eines Bremsmomentes $M_B$, das durch die Einheit 300 aus den Bremsdrücken $P_B$ an den Radbremsen berechnet wird.

Der Schwimmwinkel β wird dabei vorzugsweise durch ein Schätzverfahren bestimmt, wie es in internationalenPatentanmeldung WO 01/081139 A1 der Anmelderin mit dem Titel "Verfahren zur online Ermittlung von Größen der Fahrdynamik für ein Kraftfahrzeug" beschrieben ist, auf die in diesem Zusammenhang verwiesen wird.

Der Reibwert μ wird vorzugsweise durch ein Schätzverfahren bestimmt, wie es in der deutschen Offenlegungsschrift DE 102 08 815 A1 mit dem Titel "Verfahren zum Ermitteln eines maximalen Reibwertes" beschrieben ist, auf die im Zusammenhang mit der Reibwertermittlung verwiesen wird.

Der Längsschlupf λ des kurveninneren Vorderrades wird vorzugsweise als Differenz zwischen der Radgeschwindigkeit $v_{Rad,k}$ des kurveninneren Vorderrades und der Längsgeschwindigkeit v des Fahrzeugs berechnet:

$$\lambda = v_{Rad} - v$$

Anhand des Lenkwinkels δ, der Gierrate $\dot{\psi}$ oder des Schräglaufwinkels α kann dabei bestimmt werden, welches der Vorderräder das kurveninnere ist.

Alternativ ist ebenfalls möglich, den Längsschlupf als auf die Radgeschwindigkeit $v_{Rad}$ bezogene Differenzgeschwindigkeit gemäß dem Ausdruck

$$\lambda = \frac{v_{Rad} - v}{v_{Rad}}$$

zu bestimmen.

Im Folgenden wird jedoch von der erstgenannten Definition ausgegangen.

Der das Giermoment $T_{Req,Kupplung}$ berechnende Anteil des Fahrzeugreglers 205 zur Antriebsstrangregelung ist als Blockschaltbild in der Figur 4 dargestellt. Er enthält insbesondere eine Einheit 400 zur Berechnung der Sollwerte $\dot{\psi}_{ref}$, $\lambda_{ref}$ und $\alpha_{ref}$ der Gierrate $\dot{\psi}$, des Längsschlupfes $\lambda$ und des Schräglaufwinkels $\alpha$, eine Einheit 405 zur Berechnung des Handling-Potenzials $P_y$ des Fahrzeugs, einen Giermomentregler 410, eine Logikeinheit 415 zum Aktivieren von Steuerfunktionen und eine Einheit 420 zur Vorsteuerung von Steuereinheiten.

Zur Berechnung der Sollwerte verwendet die Einheit 400 ein Fahrzeugreferenzmodell. Dieses stellt ein "virtuelles Fahrzeug" dar, mit dem ein gewünschtes Verhalten des Fahrzeugs beschrieben werden kann. Insbesondere erlaubt das Fahrzeugreferenzmodell die Berechnung der Sollgierrate $\dot{\psi}_{ref}$ in Abhängigkeit des durch den Fahrer vorgegebenen Lenkwinkels $\delta$ und der durch den Fahrer vorgegebenen Längsgeschwindigkeit $v$ des Fahrzeugs.

In einer Ausführungsform der Einheit 400 wird bei der Bestimmung von $\dot{\psi}_{ref}$ das bekannte stationäre Einspurmodell des Fahrzeugs zugrunde gelegt. Es gilt dann

$$\dot{\psi} = \frac{v}{1 + EG_{4WD} \cdot v^2} \cdot \delta$$

wobei 1 den Radstand des Fahrzeugs bezeichnet.

Die Größe $EG_{4WD}$ ist der gewünschte Eigenlenkgradient des Fahrzeugs, der anhand des erfindungsgemäßen Verfahrens durch die Eingriffe in den Antriebsstrang eingestellt werden kann. Er ist von dem konstruktionsbedingten Eigenlenkgradienten EG des Fahrzeugs zu unterscheiden, dessen Wert sich unveränderbar aus Fahrzeugparametern ergibt.

Da durch das Fahrzeugreferenzmodell das gewünschte Verhalten des Fahrzeugs beschrieben werden soll, ist in dem Modell der gewünschte Eigenlenkgradient $EG_{4WD}$ zu verwenden. In einer bevorzugten Ausführungsform der Erfindung nimmt $EG_{4WD}$ den Wert Null an, so dass ein neutrales Fahrverhalten des Fahrzeugs erzielt wird.

Im Allgemeinen kann der Eigenlenkgradient $EG_{4WD}$ als fester Paameter oder als Kennlinie vorgegeben werden. Durch die Vorgabe einer geeigneten Kennlinie kann dabei beispielsweise vorteilhaft eine stationäre Gierverstärkung

$$\left(\frac{\dot{\psi}}{\delta}\right)_{stat} = const.$$

eingestellt werden.

Selbstverständlich kann das Wunschverhalten des Fahrzeugs ebenfalls durch ein nicht-stationäres Einspurmodell abgebildet und dynamisch angepasst werden, wie es ebenfalls bei ESP-Systemen gemäß dem Stande der Technik vorgenommen wird und auch hier bevorzugt ist.

Die Sollwerte $\lambda_{ref}$ und $\alpha_{ref}$ für den Längsschlupf $\lambda$ und den Schräglaufwinkel $\alpha$ können beispielsweise in Form von konstanten Schwellenwerten $\lambda_{Thr}$ und $\alpha_{Thr}$ vorgegeben werden:

$$\lambda_{ref} = \lambda_{Thr}$$

$$\alpha_{ref} = \alpha_{Thr}$$

Der Schwellenwert $\lambda_{thr}$ nimmt Werte zwischen 5 km/h und 30 km/h und vorzugsweise einen Wert von 15 km/h an. Der Schwellenwert $\alpha_{thr}$ nimmt Werte zwischen 0° und 10° an.

Durch die Einheit 405 wird das Fahrzeug-Handlingpotenzial $P_y$ berechnet. Dieses gibt im Wesentlichen an, um welchen Betrag die Seitenführungskraft $F_y$ im momentanen Fahrzustand des Fahrzeugs erhöht werden kann, bis sie ihren Maximalwert $F_{y,max}$ erreicht.

Bei der hier betrachteten Antriebsstrangregelung, bei der Eingriffe an der Hinterachse des Fahrzeugs vorgenommen werden, ist dabei insbesondere das Handling-Potenzial $P_y$ an der Hinterachse von Interesse.

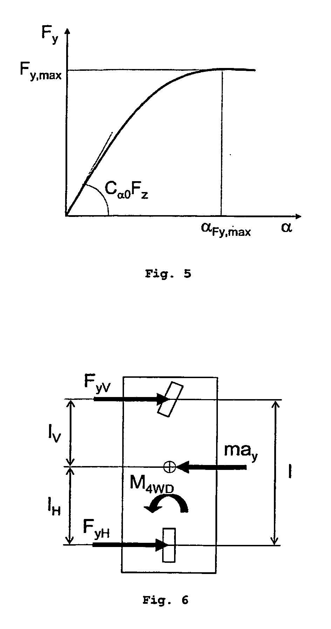

Ein typischer Verlauf einer Seitenführungskraft-Schräglaufwinkel-Kennlinie ist in einem Seitenführungskraft-Schräglaufwinkel-Diagramm in der Figur 5 dargestellt. Dem Diagramm ist zu entnehmen, dass die Seitenführungskraft $F_y$ zunächst mit zunehmendem Schräglaufwinkel $\alpha$ bis zu einem reibwertabhängigen Maximalwert $F_{y,max}$ zunimmt. Der dem Maximum $F_{y,max}$ zugeordnete Schräglaufwinkel wird dabei als $\alpha_{Fy,max}$ bezeichnet. Für Schräglaufwinkel $\alpha > \alpha_{Fy,max}$ nimmt die Seitenführungskraft wieder leicht ab.

Der Schräglaufwinkel $\alpha$ der Hinterräder des Fahrzeugs wird durch die Einheit 405 anhand der Beziehung

$$\alpha = -\beta + \frac{1_H}{v} \cdot \dot{\psi}$$

bestimmt, wobei $1_H$ ein Abstand zwischen einem Fahrzeugschwerpunkt und einem Schnittpunkt zwischen einer Fahrzeuglängsachse und der Hinterachse ist.

Zur Bestimmung des Handling- bzw. Seitenführungskraftpotenzials $P_y$ wird der Schräglaufwinkel $\alpha_{Fy,max}$ bestimmt. Die Seitenkraft-Schräglaufwinkel-Kennlinie wird dafür in der folgenden Weise parametrisiert:

$$F_y = C_{\alpha 0} \cdot F_z \cdot \alpha - \frac{C_{\alpha 0}^2 \cdot F_z^2}{4 \cdot \mu \cdot F_z} \cdot \alpha^2 \qquad (1)$$

Es handelt sich bei diesem Ausdruck um eine Approximation, die für Schräglaufwinkel mit $\alpha \leq \alpha_{Fy,max}$ gültig ist. Mit $C_{\alpha 0}$ wird dabei ein sog. Anfangssteigungs-Parameter bezeichnet, $F_z$ bezeichnet die Aufstands- oder Normalkraft, die sich insbesondere bei Wankbewegungen des Fahrzeugs verändert.

Anhand des Ausdrucks für $F_y$ nach Gl. (1) ergibt sich:

$$\alpha_{Fy,max} = \frac{2 \cdot \mu}{C_{\alpha 0}}$$

Der Wert $\alpha_{Fy,max}$ ist somit unabhängig von der Aufstandkraft $F_z$, die hier nicht bestimmt werden muss.

Das Seitenführungskraftpotenzial $P_y$ wird in einer bevorzugten Durchführungsform des erfindungsgemäßen Verfahrens als Einserkomplement eines momentanen Schräglaufwinkelausnutzungsgrades $\alpha_{util}$ bestimmt:

$$P_y = 1 - \alpha_{util}$$

Der Schräglaufwinkelausnutzungsgrad $\alpha_{util}$ wird in folgender Weise definiert und berechnet:

$$\alpha_{util} = \begin{cases} \dfrac{C_{\alpha 0}}{2 \cdot \mu} \cdot |\alpha| & , |\alpha| < \alpha_{Fy,max} \\ 1 & , |\alpha| \geq \alpha_{Fy,max} \end{cases}$$

Durch die Einheit 420 wird ein Giermoment $T_{vorsteuer}$ bestimmt, das dem durch die Eingriffe in den Antriebsstrang zu erzeugenden Giermoment entspricht.

Dieses wird anhand eines Fahrzeugmodells bestimmt, bei dem es sich vorzugsweise um ein sog. inverses Modell handelt, bei dem das die Sollgierrate $\dot{\psi}_{ref}$ erzeugende Giermoment als Ausgangsgröße in Abhängigkeit der Sollgierrate $\dot{\psi}_{ref}$ ermittelt wird. Das Übertragungsverhalten der Einheit 420 entspricht damit dem inversen Übertragungsverhalten einer Regelstrecke zur Fahrdynamikregelung ohne Vorsteuerung.

Ausgangspunkt für die Bestimmung des inversen Fahrzeugmodells ist das lineare Einspurmodell. Aus der Kräfte- und Momentenbilanz bei stationärem Verhalten folgt

$$m \cdot a_y = F_{yv} + F_{yH}$$
$$\Theta \cdot \frac{d^2\psi}{dt^2} = \quad 0 \quad = F_{yv} \cdot l_v + F_{yH} \cdot l_H + M_{4WD} \qquad (2)$$

Dabei bezeichnet m die Masse des Fahrzeugs, $l_v$ einen Abstand zwischen dem Fahrzeugschwerpunkt und einem Schnittpunkt zwischen einer Fahrzeuglängsachse und der Vorderachse, $F_{yv}$ die Seitenführungskraft der Vorderräder, $F_{yH}$ die Seitenführungskraft der Hinterräder, $\Theta$ ein Trägheitsmoment des Fahrzeugs bezüglich seiner Hochachse und $d^2\psi/dt^2$ eine Gierbeschleunigung des Fahrzeugs. Die Größe $M_{4wD}$ ist das durch die Regeleingriffe zu erzeugende Giermoment.

In der Figur 6 sind verschiedene dieser Größen in eine Skizze eines Einspurmodells eingetragen.

Eine Umformung des Gleichungssystems in Gl. (2) und Einsetzen der linearen Approximationen

$$F_{yv} = C_v \cdot \left(\delta - \beta - \frac{l_v}{v}\,\dot\psi\right) \text{ und } F_{yH} = C_H \cdot \left(-\beta + \frac{l_H}{v}\,\dot\psi\right) \qquad (3)$$

für die Seitenkräfte $F_{yv}$ und $F_{yH}$ mit Fahrzeugparametern $C_v$ und $C_H$ - den sog. Schräglaufsteifigkeiten - führt unter Ausnutzung der Relation $1 = 1v + 1_H$ auf das Gleichungssystem

$$C_v \cdot \left(\delta - \beta - \frac{l_v}{v}\,\dot\psi\right) \cdot l = m \cdot a_y \cdot l_H - M_{4WD}$$
$$C_H \cdot \left(-\beta + \frac{l_H}{v}\,\dot\psi\right) \cdot l = m \cdot a_y \cdot l_v + M_{4WD} \qquad (4)$$

Nach einer Eliminierung von $\beta$ und unter Berücksichtigung der Beziehung $a_y = v \cdot \dot\psi$ lässt sich daraus der folgende Ausdruck für die Gierrate $\dot\psi$ erhalten:

$$\dot\psi = \frac{v}{1 + EG \cdot v^2} \cdot \left(\delta + \frac{C_v + C_H}{C_v \cdot C_H \cdot l} \cdot M_{4WD}\right) \text{ mit } EG := \frac{m}{l}\left(\frac{l_H}{C_v} - \frac{l_v}{C_H}\right) \qquad (5)$$

EG ist der konstruktionsbedingte Eigenlenkgradient des Fahrzeugs.

Mit dem letzten Ausdruck in Gl. (5) wurde ein Ausdruck für die Gierrate $\dot\psi$ bestimmt, die sich infolge eines durch den Fahrer eingestellten Lenkwinkels $\delta$, einer durch den Fahrer eingestellten Fahrzeuglängsgeschwindigkeit $v$ und eines durch die Eingriffe in den Antriebsstrang erzeugten Giermoments $M_{4WD}$ ergibt.

Durch die Regeleingriffe soll die Gierrate $\dot\psi_{ref}$ eingestellt werden.
Zur Berechnung von $M_{4WD}$ können somit der letzte Ausdruck für die Gierrate $\dot\psi$ und der oben angegebene Ausdruck für $\dot\psi_{ref}$ gleichgesetzt werden, so dass folgt:

$$M_{4WD} = \frac{\left(1 + EGv^2\right) \cdot C_v \cdot C_H \cdot l}{C_v + C_H}\left(\frac{1}{1 + EG_{4WD} \cdot v^2} - \frac{1}{1 + EG \cdot v^2}\right) \cdot \delta \quad (6)$$

Dieser Ausdruck repräsentiert das inverse Fahrzeugmodell. Er ist in dieser Form jedoch aufgrund der verwendeten Approximation für die Seitenführungskräfte $F_{yv}$ und $F_{yH}$ nur gültig, falls ein Schräglaufwinkel $\alpha$ an den Hinterrädern vorliegt, für den die Seitenführungskräfte näherungsweise proportional zum Schräglaufwinkel $\alpha$ ansteigen.

Um das Modell auch dann einsetzen zu können, wenn die Seitenführungskräfte $F_{yH}$ an den Hinterrädern in eine Sättigung eintreten, ist es zweckmäßig, die obige Approximation

$$F_{yH} = C_H \cdot \alpha_H \quad \text{mit} \quad \alpha_H := -\beta + \frac{l_H}{v} \dot{\psi}$$

in Gl.(3) durch die Approximation

$$F_{yH} = C_H \cdot P_y \cdot \alpha$$

zu ersetzen, wobei der Schräglaufwinkel $\alpha$ in diesem Ausdruck insbesondere als Schräglaufwinkel $\alpha_H$ der Hinterräder aufzufassen ist. Innerhalb des letzten Ausdrucks für das Giermoment $M_{4WD}$ entspricht der Übergang von der einen zu der anderen Approximation einer Ersetzung $C_H \rightarrow C_H \cdot P_y$.

Als gewünschtes Fahrverhalten des Fahrzeugs kann vorzugsweise ein neutrales Fahrverhalten anhand des erfindungsgemäßen Verfahrens eingestellt werden. In dem Ausdruck zur Berechnung von $M_{4WD}$ in Gl.(6) muss dafür $E_{4WD} = 0$ gesetzt werden.

Man erhält somit aus dem Ausdruck in Gl.(6) für das inverse Fahrzeugmodell für ein sich neutral verhaltendes Fahrzeug:

$$M_{4WD} = \frac{C_V \cdot C_H \cdot P_y}{C_V + C_H \cdot P_y} \cdot EG \cdot v^2 \cdot \delta \qquad (7)$$

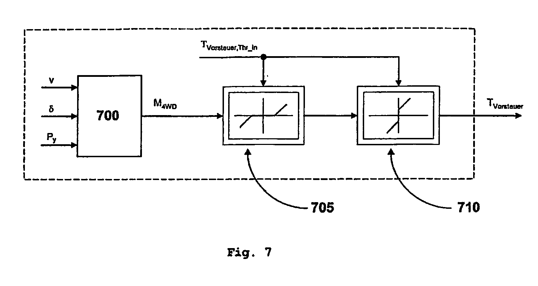

Die Vorsteuerung 420, die das Giermoment $T_{Vorsteuer}$ auf der Grundlage eines derartigen inversen Fahrzeugmodells berechnet, ist in der Figur 7 in einem Blockschaltbild detailliert dargestellt:

In Abhängigkeit der Eingangsgrößen $v$, $\delta$ und $P_y$ berechnet die Einheit 700 das zum Erreichen der Gierrate $\dot{\psi}_{ref}$ bzw. zum Erreichen eines neutralen Fahrverhaltens zu erzeugende Giermoment $M_{4WD}$. Das Signal $M_{4WD}$ wird dann durch die Blöcke 705 und 710 bearbeitet, deren Ausgangssignal das bei der Vorsteuerung einzustellende Giermoment $T_{Vorsteuer}$ ist.

Die Blöcke filtern dabei anhand von Kennlinien Giermomentanforderungen $M_{4WD}$ heraus, die in einem durch einen Schwellenwert $T_{Vorsteuer,Ther\_in}$ vorgegebenen Band um den Nullpunkt liegen. Der Schwellenwert $T_{Vorsteuez,Thr\_in}$ liegt dabei vorzugsweise zwischen 0 Nm und 200 Nm.

Vorzugsweise wird dabei eine Hysteresekurve zugrunde gelegt, so dass ein von Null verschiedenes Signal $T_{Vorsteuer}$ erhalten wird, nachdem das Signal $M_{4WD}$ einen ersten Schwellenwert, beispielsweise $T_{Vorsteuer,Thr\_in}$ überschreitet und das Signal $M_{4WD}$ wieder weggeblendet wird, nachdem es einen zweiten Schwellenwert, beispielsweise einen prozentualen Anteil von $T_{Vorsteuer,Thr\_in}$ unterschreitet.

Dies verhindert, dass sich aufgrund kleiner Stellanforderung ein nervöses Fahrverhalten einstellt.

Neben der Vorsteuereinheit 420 enthält der erfindungsgemäße Antriebsstrangregler zudem den Giermomentregler 410, welcher einen Rückkopplungsanteil des Antriebsstrangreglers realisiert.

Eingangsgrößen des Giermomentreglers 410 sind die Regelabweichung $\Delta\dot{\psi}$ der Gierrate $\dot{\psi}$, die als Differenz zwischen dem erfassten Istwert $\dot{\psi}$ der Gierrate und dem berechneten Sollwert $\dot{\psi}_{ref}$ bestimmt wird, die Regelabweichung $\Delta\lambda$ des Längsschlupfes $\lambda$, die als Differenz zwischen dem berechneten momentan vorliegenden Längsschlupf $\lambda$ und dem Sollwert $\lambda_{ref}$ bestimmt wird und die Regelabweichung $\Delta\alpha$ des Schräglaufwinkels $\alpha$, die als Differenz zwischen dem berechneten momentan vorliegenden Schräglaufwinkel $\alpha$ und dem Sollwert $\alpha_{ref}$, bestimmt wird.

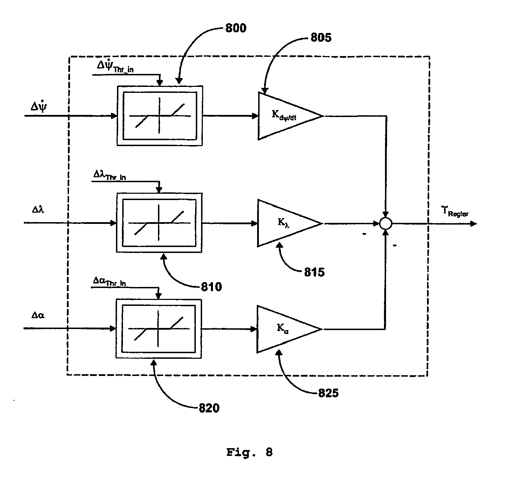

Die Regelung durch den Giermomentregler 410 besteht somit aus drei separaten Zweigen, wodurch eine kombinierte Regelung wichtiger Fahrzustandsgrößen vorgenommen wird. Eine mögliche Ausführungsform des Reglers 410 ist in der Figur 8 anhand eines Blockschaltbilds veranschaulicht.

Durch die Blöcke 800, 810 und 820 werden die Eingangsgrößen $\Delta\dot{\psi}$, $\Delta\lambda$ und $\lambda\alpha$ zunächst mit dem Schwellenwert verglichen, wobei die Blöcke vorzugsweise als Totzonenglieder realisiert sind. Die nachfolgenden Proportionalglieder 805, 815 und 825 berechnen somit nur dann einen von Null verschiedenen anteiligen Wert an der Stellgröße $T_{Regler}$, wenn die Regelabweichung $\Delta\dot{\psi}$, $\Delta\lambda$ und $\Delta\alpha$ jeweils einen Schwellenwert überschreiten. Die Totzonen-Elemente dienen somit wiederum einer "Beruhigung" der Stellgröße $T_{Regler}$.

Der Schwellenwert $\Delta\dot{\psi}_{Thr\_in}$ wird dabei durch einen Wert zwischen 0 und 10°/s, vorzugsweise 3°/s vorgegeben.

Der Schwellenwert $\Delta\lambda_{Thr\_in}$ liegt zwischen 5 km/h und 30 km/h, vorzugsweise bei 15 km/h.

Der Schwellenwert $\Delta\alpha_{Thr\_in}$ liegt zwischen 0 und 10°, vorzugsweise bei 5°.

Durch Proportionalglieder 805, 815 und 825 wird aus jeder der Eingangsgrößen ein Giermoment berechnet: Das Proportio-nalglied 805 berechnet ein Giermoment $T_{\dot{\psi}} = K_{\dot{\psi}} \cdot \Delta\dot{\psi}$, das Proportionalglied 815 berechnet ein Giermoment

$T_\lambda = K_\lambda \cdot \Delta\lambda$ und das Proportionäglied 825 berechnet ein Giermoment $T_\alpha = K_\alpha \cdot \Delta_\alpha$.

Das die Regelabweichung $\Delta\dot\psi$ kompensierende Giermoment $T_{Regler}$ wird nachfolgend an einer Subtraktionsstelle in der Form

$$T_{Regler} = T_{\dot\psi} - T_\lambda - T_\alpha$$

bestimmt.

Die Reglerverstärkungen $K_{\dot\psi}$, $K_\lambda$ und $K_\alpha$ werden geeignet vorgegeben. Insbesondere sollte sich durch eine Wahl der Verstärkungen ein stabiles Regelverhalten ergeben.

In anderen möglichen Ausführungsformen des Reglers 410 sind die Proportionalglieder durch dynamische-Regelglieder ersetzt oder ergänzt. Bei diesen Ausführungsformen ist die Regelstabilität weiter erhöht.

Die an die Einheit 220 zur Berechnung der Kupplungsmomente $M_{Kup,1,soll}$ bis $M_{Kup,N,soll}$ übermittelte Stellgröße $T_{req,Kupplung}$ wird durch eine Addition des durch die Vorsteuereinheit 420 ermittelten Giermoments $T_{Vorsteuer}$ und des durch den Gierratenregler 410 ermittelten Giermoments $T_{Regler}$ an einer Summationsstelle 425 erhalten.

Erfindungsgemäß ist dabei jedoch eine zusätzliche Aktivierungslogik 415 vorgesehen. Diese ermittelt Stellsignale $T_{Regler,an}$ oder $T_{Regler,aus}$ sowie $T_{Vorsteuer,an}$ oder $T_{Vorsteuer,aus}$, durch welche die Signale $T_{Regler}$ und $T_{Vorsteuer}$ zugeschaltet oder unterdrückt werden.

So wird das Signal $T_{Regler}$ an die Summationsstelle 425 übermittelt, wenn die Logik 415 das Ausgangssignal $T_{Regler,an}$ bestimmt. Bei dem Ausgangssignal $T_{Regler,aus}$ wird das Signal $T_{Regler}$ nicht an die Summationsstelle 425 übergeben. Analog wird das Signal $T_{Vorsteuer}$ zugeschaltet oder unterdrückt.

Eingangsgrößen für die Aktivierungslogik sind die Regelabweichungen $\Delta\dot\psi$, $\Delta\lambda$ und $\Delta\alpha$, die Pedalstellung $F_{Ped}$ des Fahrpedals sowie der Schräglaufwinkel-Ausnutzungsgrad $\alpha_{util}$.

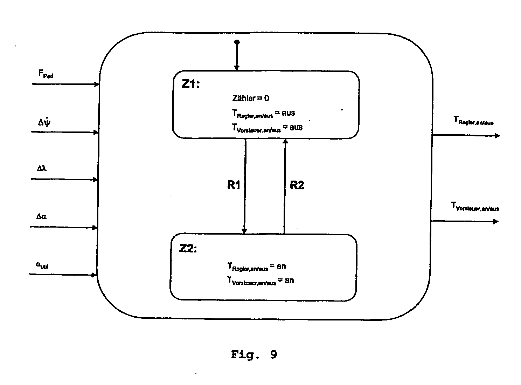

Die Funktion der Logikeinheit 415 wird in der Figur 9 anhand eines Zustandsübergangsdiagramms veranschaulicht. Es wird dabei davon ausgegangen, dass ein erster Zustand Z1 und ein zweiter Zustand Z2 angenommen werden können.

Im dem Zustand Z1 nehmen die Ausgangsgrößen die Werte $T_{Regler,aus}$ und $T_{Vorsteuer,aus}$ an. In dem Zustand Z2 nehmen die Ausgangsgrößen die Werte $T_{Regler,aus}$ und $T_{Vorsteuer,aus}$ an.

Die Logikeinheit 415 verfügt zudem über einen Zähler, der im Zustand Z1 auf den Wert 0 gesetzt wird.

Ein Übergang von dem Zustand Z1 in den Zustand Z2 erfolgt anhand einer Regel R1 Diese kann in folgender Weise als Pseudocode formuliert werden:

```
Falls  (      |Δψ̇| > Δψ̇_Thr_in
        oder  |Δλ| > Δλ_Thr_in
        oder  |Δα| > Δα_Thr_in
        oder  α_util > α_util,Thr_in
        )
        und   F_Ped > F_Ped,Thr_in
Dann gehe in Zustand Z2
```

Ein Übergang von dem Zustand Z2 in den Zustand Z1 erfolgt anhand der Regel R2, die sich wie folgt angeben lässt:

Falls $\alpha_{util} < \alpha_{util,Thr\_out}$
Falls Zähler = Zähler$_{Thr}$
Dann gehe in Zustand Z1
Sonst inkrementiere Zähler
Sonst Falls $F_{Ped} \leq F_{Ped,Thr\_out}$
und $\Delta\dot\psi > 0$

Dann gehe in Zustand Z1

Dabei liegt der Schwellenwert $\alpha_{util,Thr\_in}$ zwischen 0,3 und 1, vorzugsweise bei 0,7.

Der Schwellenwert $\alpha_{util,Thr\_out}$ liegt zwischen 0,1 und 0,5, vorzugsweise bei 0,3

Der Schwellenwert $F_{Ped,Thr\_in}$ liegt zwischen 0 und 20%, vorzugsweise bei 4%.

Der Schwellenwert $F_{Ped,Thr\_out}$ liegt zwischen 0 und 10%, vorzugsweise bei 0.

Anhand der Regel R1 wird das Eintreten einer sicherheitskritischen Fahrsituation erkannt, anhand der Regel R2 wird ermittelt, ob die sicherheitskritische Fahrsituation überwunden ist. Ferner wird anhand der Fahrpedalstellung überprüft, ob ein erfindungsgemäßer Regeleingriff vorgenommen werden kann.

Die Inklusionen der Regeln R1 und R2 werden in jedem Abtastzyklus einmal überprüft. Der Schwellenwert $Zähler_{Thr}$ wird dabei in Abhängigkeit der Dauer eines Abtastzyklus so gewählt, dass die Bedingung Zähler = $Zähler_{Thr}$ bei einer fortwährenden Inkrementierung in jedem Abtastzyklus nach einer Zeitspanne zwischen 0 und 300 ms, vorzugsweise nach 200 ms erfüllt ist.

Gemäß der Regel R1 wird eine erfindungsgemäße Regelfunktion somit aktiviert, wenn entweder der Betrag der Regelabweichung $\Delta\dot{\psi}$ der Gierrate $\dot{\psi}$, der Betrag der Regelabweichung $\Delta\lambda$ des Längsschlupfes $\lambda$, der Betrag der Regelabweichung $\Delta\alpha$ des Schräglaufwinkels $\alpha$ oder der Schräglaufwinkel-Ausnutzungsgrad $\alpha_{util}$ einen vorgegebenen Schwellenwert überschreitet, und wenn das Fahrzeug ausreichend beschleunigt wird, was anhand der Stellung $F_{P\,e\,d}$ des Fahrerpedals erkannt wird.

Ein Regeleingriff wird gemäß der Regel R2 beendet, wenn der Schräglaufwinkel-Ausnutzungsgrad $\alpha_{util}$, den Schwellenwert $\alpha_{util,Thr\_out}$ unterschritten und der Zähler den Schwellenwert $Zähler_{Thr}$ erreicht hat oder wenn die Fahrerpedalstellung unter den Schwellenwert $F_{Ped.Thr\_out}$ gefallen ist, und die Regelabweichung $A\dot{\psi}$ einen Wert kleiner als Null annimmt. Im letzten Fall liegt eine Situation analog zu der in der oben angegebenen Tabelle durch "Fahrpedal = 0" und "$T_{varsteuer}$ > 0" Situation vor, in der eine Gierratenregelung aufgrund von Eingriffen in den Antriebsstrang nicht vorgenommen werden kann.

Das Bezugszeichen S1 in der Figur 9 bezeichnet einen Schritt, demgemäß nach einem Zündungsneustart der Zustand Z1 angenommen wird.

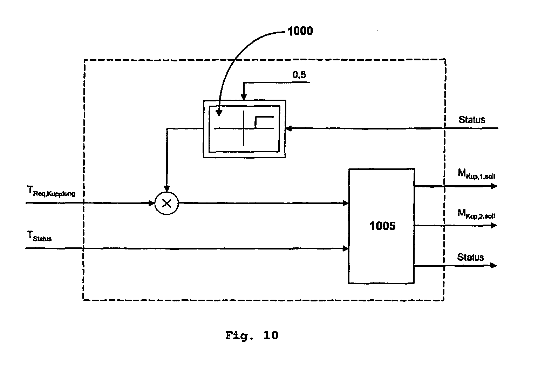

In der Figur 10 ist ein Blockdiagramm des Antriebsstrangreglers 230 dargestellt. Eingangsgrößen des Reglers sind das angeforderte Giermoment $T_{Req,Kupplung}$ und das Signal $T_{Status}$ sowie ein weiteres Statussignal "Status", welches sich auf den Status der Antriebsstrang-Steuerfunktion bezieht.

Das Signal $T_{Status}$ kann die Werte "an" und "aus" annehmen und wird in dem Block 430 durch eine logische Verknüpfung der Signale $T_{Regler,an/aus}$ und $T_{Vorsteuer,an/aus}$ erhalten. Es nimmt dabei nur dann den Wert aus an, wenn Werte $T_{Regler,aus}$ und $T_{Vorsteuer,aus}$ für diese Signale vorliegen.

Das weitere Statussignal nimmt den Wert 1 an, wenn eine Fehlererkennung der Antriebsstrangregelung 220 keinen Fehler ermittelt hat. Beim Vorliegen eines Fehlers nimmt das Statussignal den Wert 0 an.

Das Statussignal wird innerhalb des Antriebsreglers zunächst durch den Block 1000 bearbeitet. Das Ausgangssignal des Blocks 1000 nimmt einen Wert Eins an, falls das Statussignal einen Wert über 0,5 annimmt und hat sonst den Wert Null.

Eine multiplikative Verknüpfung des durch den Block 1000 bearbeiteten Statussignals und des Signals $T_{Req,Kupplung}$ realisiert eine vorteilhafte "Fail-Safe"-Funktion, so dass Regeleingriffe beim Vorliegen eines erkannten Fehlers innerhalb der Steuereinheit oder der die Kupplungen steuernden Aktuatoren oder der Kupplungen selbst unterdrückt werden.

Das multiplizierte Signal $T_{Req,Kupplung}$ sowie das Signal $T_{Status}$ werden an eine Einheit 1005 übergeben, die durch einzelne Kupplungen zu übertragende Drehmomente berechnet. Die Berechnung erfolgt dabei so, dass das Giermoment $T_{Req,xupplung}$ durch eine Steuerung der Kupplungen entsprechend den berechneten Drehmomenten erzeugt wird.

Die Steuerung der Kupplungen wird durch die Einheit 230 vorgenommen.

Zusammenfassend festgestellt, stellt die Erfindung ein vorteilhaftes Verfahren und eine vorteilhafte Vorrichtung zur Verfügung, die es ermöglicht, eine Fahrdynamikregelung auf der Grundlage von Eingriffen in den Antriebsstrang eines Fahrzeugs durchzuführen. Die Erfindung zeichnet sich dabei vor allem dadurch aus, dass das Fahrverhalten des Fahrzeugs im fahrdynamischen Grenzbereich stabilisiert und damit sicherer gestaltet wird.

Die erfindungsgemäßen Regeleingriffe sind damit eine wirkungsvolle und sinnvolle Ergänzung der Regeleingriffe durch ein herkömmliches, auf Bremsen- und Motoreingriffen basierenden ESP-Systems. Sie steigern dabei nicht nur die Zuverlässigkeit und Effektivität einer Fahrdynamikregelung, sondern tragen auch zum Fahrkomfort im Grenzbereich bei, da die erfindungsgemäßen Eingriffe, im Gegensatz zu den Eingriffen eines herkömmlichen ESP-Systems, nicht mit einem unkomfortablen Abbremsen des Fahrzeugs verbunden sind.

Die Schwellenwerte, bei deren Überschreiten ein Eintritt in die erfindungsgemäße Regelung erfolgt, sollten kleiner sein als die Schwellenwerte der ESP-Regelung.

Gleichwohl können die erfindungsgemäßen Regeleingriffe die ESP-Regeleingriffe in sehr kritischen Fahrsituationen nicht ersetzen. In sehr vielen Fahrsituationen machen sie diese jedoch überflüssig, da sie das Fahrzeug stabilisieren, bevor ein sehr kritischer Fahrzustand entsteht.

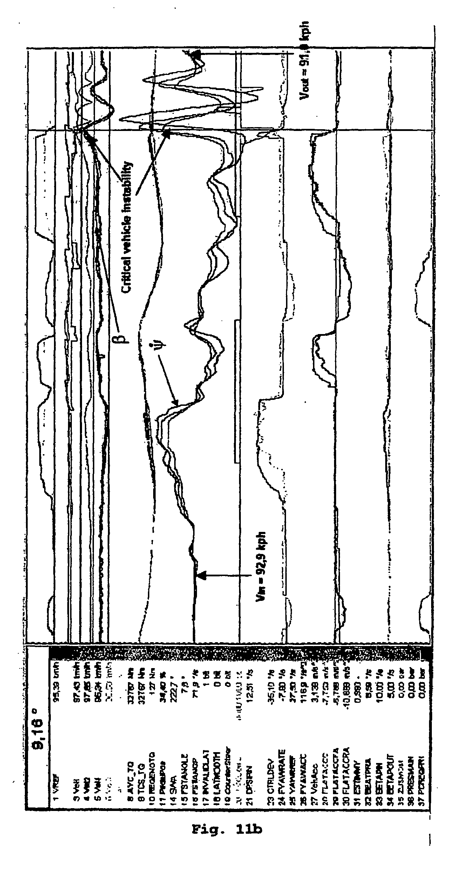

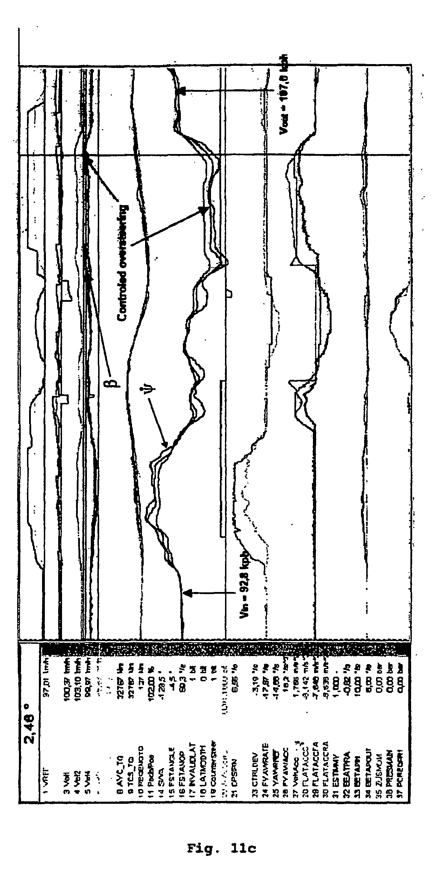

Die erfindungsgemäßen Verbesserungen der Wirksamkeit einer Antriebsstrangregelung gegenüber bekannten gattungsgemäßen Verfahren und Vorrichtungen zeigt ein Vergleich der Diagramme, die in den Figuren 11b und 11c gezeigt sind.

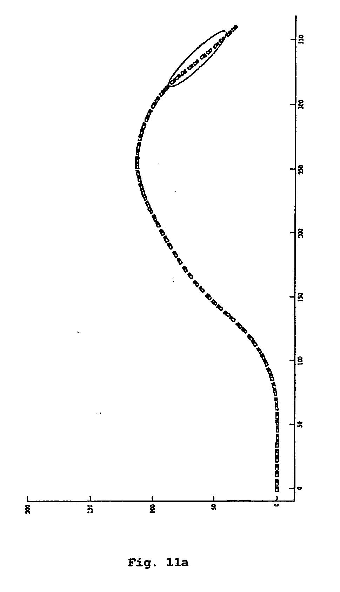

Die Diagramme geben den Verlauf verschiedener Größen während eines in der Figur 11a veranschaulichten Fahrmanövers wieder, bei dem zunächst eine Linkskurve und dann eine lange Rechtskurve mit einer Eingangsgeschwindigkeit von ca. 91,5 km/h durchfahren werden. Während der Kurvenfahrt wurde das Fahrzeug beschleunigt.

Die Diagramme in der Figur 11b sind dabei für ein Fahrzeug aufgezeichnet worden, in dem eine Antriebsstrangregelung durchgeführt wird, die nicht die erfindungsgemäßen Merkmale aufweist.

Die Diagramme in der Figur 11c sind für ein baugleiches Fahrzeug aufgezeichnet worden, in dem eine erfindungsgemäße Antriebsstrangregelung durchgeführt wird.

Die Diagramme zeigen insbesondere den Verlauf der Gierrate $\dot{\psi}$ und des Schwimmwinkels $\beta$.

Anhand dieser Verläufe ist in der Figur 11b eine kritische Instabilität des Fahrzeugs mit einer sehr hohen Gierrate $\dot{\psi}$ und einer kritischen Überhöhung des Schwimmwinkels während des Durchfahrens der Rechtskurve zu erkennen. Die in das Diagramm eingezeichneten Pfeile zeigen auf diese überhöhten Werte. Der Verlauf der Größen an dieser Stelle verdeutlicht ein Schwimmen und Schleudern des Fahrzeugs.

In dem Diagramm in der Figur 11a sind die Stellen der Kurve, an denen kritische Fahrzustände auftreten zur Verdeutlichung eingekreist.

Der Verlauf von Gierrate $\dot{\psi}$ und Schwimmwinkel $\beta$, der dem Diagramms in der Figur 11c zu entnehmen ist, verdeutlicht demgegenüber an derselben Stelle der Rechtskurve lediglich ein kontrolliertes Übersteuern des Fahrzeugs. Das Fahrzeug schleudert nicht, und es ist kein sicherheitskritisches Schwimmen zu beobachten.

Dies lässt sich auf die erfindungsgemäßen Merkmale zurückführen, dass eine Vorsteuerung anhand eines in Abhängigkeit des Reibwertes ermittelten Fahrzeugreferenzmodells und eine kombinierte Regelung wichtiger Fahrzustandsgrößen vorgenommen wird.

Da die erfindungsgemäßen Eingriffe das Fahrzeug sehr schnell stabilisieren und da kein Abbremsen des Fahrzeugs durchgeführt wird, ist die Ausgangsgeschwindigkeit aus der Kurve bei der Durchfahrt mit der Unterstützung durch das erfindungsgemäße Verfahren mit 107,0 km/h wesentlich höher als bei der Durchfahrt ohne die Unterstützung mit den erfindungsgemäße Merkmale. In diesem Fall beträgt die Ausgangsgeschwindigkeit lediglich 91 km/h.

**Patentansprüche**

1. Verfahren zum Regeln der Fahrdynamik eines Fahrzeugs, bei dem wenigstens ein Rad des Fahrzeugs aufgrund einer Steuerung einer ein Drehmoment (225, 230) an das Rad übertragenden Kupplung (110, 120, 125, 130, 145, 155)) und/oder aufgrund einer Steuerung eines Drehmoments auf das Rad und wenigstens auf ein weiteres Rad verteilenden Differenzials (105, 115, 135 140, 150) mit einem Drehmoment (M) beaufschlagt wird, dass ein Wert des Drehmoments (M) in Abhängigkeit eines ersten und eines zweiten Wertes eines Giermoment $T_{Reg}$ bestimmt wird, wobei der erste Wert des Giermoments in Form eines einen Sollwert einer Gierrate erzeugenden Wertes des Giermoments anhand eines Fahrzeugreferenzmodells ermittelt wird und der zweite Wert des Giermomentes in Abhängigkeit einer Regelabweichung zwischen dem Sollwert der Gierrate $\dot{\psi}_{ref}$ und einem erfassten Istwert der Gierrate $\dot{\psi}$ sowie in Abhängigkeit einer Regelabweichung zwischen einem Sollwert und einem Istwert einer weiteren, von der Gierrate $\dot{\psi}$ verschiedenen Fahrzustandsgxöße ($200_N$) bestimmt wird
**dadurch gekennzeichnet,**
**dass** die Bestimmung des Drehmomentes M in Äbhängigkeit eines Vergleichs zwischen einer Regelabweichung wenigstens einer Fahrzustandgröße ($200_N$) und einem vorgegeben Schwellenwert aktiviert wird.

2. Verfahren nach Anspruch 1,
**dadurch gekennzeichnet,**
**dass** die Sollgierrate $\dot{\psi}_{ref}$ in Abhängigkeit von durch den Fahrer eingestellten Größen bestimmt wird.

3. Verfahren nach einem oder beiden der Ansprüche 1 und 2,
**dadurch gekennzeichnet,**
**dass** ein Reibungskoeffizient $\mu$ eines momentanen Untergrundes in das Fahrzeugreferenzmodell eingeht.

4. Verfahren nach einem oder mehreren der vorangegangenen Ansprüche,
**dadurch gekennzeichnet,**
**dass** eine Bestimmung des Reibungskoeffizienten $\mu$ durchgeführt wird.

5. Verfahren nach einem oder mehreren der vorangegangenen Ansprüche,
**dadurch gekennzeichnet,**
**dass** es sich bei der weiteren Fahrzustandsgröße ($200_N$) um einen Schräglaufwinkel $\alpha$ wenigstens eines Rades des Fahrzeugs handelt.

**6.** Verfahren nach einem oder mehreren der vorangegangenen Ansprüche,
**dadurch gekennzeichnet,**
**dass** es sich bei der weiteren Fahrzustandsgröße um einen Längsschlupf $\lambda$ wenigstens eines Rades des Fahrzeugs handelt.

**7.** Verfahren nach einem oder mehreren der vorangegangenen Ansprüche,
**dadurch gekennzeichnet,**
**dass** das Rad nur dann mit dem Drehmoment M beaufschlagt wird, wenn ein Wert wenigstens einer Fahrzustandsgröße (200N) einen vorgegebenen ersten Schwellenwert überschreitet oder einen zweiten Schwellenwert nicht unterschreitet.

**8.** Vorrichtung zum Regeln der Fahrdynamik eines Fahrzeuges, beinhaltend wenigstens einen Aktuator zum Steuern einer ein Drehmoment an ein Rad des Fahrzeugs übertragenden Kupplung (110, 130, 145, 155, 150, 160) und/oder wenigstens einen Aktuator zum Steuern eines Drehmoments auf Räder des Fahrzeugs verteilenden Differenzials (105, 115), mit

a. einer Vorsteuereinheit (420), die ein erstes eine Sollgierrate erzeugendes Giermoment ermittelt,
b. einer Regeleinheit (415), die eine zweite Gierrate in Abhängigkeit einer Regelabweichung zwischen der Sollgierrate und einer erfassten Istgierrate sowie in Abhängigkeit einer Regelabweichung zwischen einem Sollwert und einem Istwert einer weiteren, von einer Gierrate verschiedenen Fahrzustandgröße ermittelt,
c. einer Steuereinheit (230), die die Aktuatoren in Abhängigkeit eines anhand des ersten und des zweiten Giermoments ermittelten Drehmoments M steuert, und

**gekennzeichnet durch** eine Aktivierungslogik, die die Steuereinheit in Abhängigkeit eines Vergleichs zwischen einer Regelabweichung wenigstens einer Fahrzustandgröße (200$_N$) und einem vorgegeben Schwellenwert, aktiviert.

**Claims**

**1.** Method for regulating the driving dynamics of a vehicle, in which a torque (M) is applied to at least one wheel of the vehicle on the basis of controlling a clutch (110, 120, 125, 130, 145, 155) which transmits a torque (225, 230) to the wheel and/or on the basis of controlling a differential (105, 115, 135, 140, 150) which distributes a torque to the wheel and to at least one further wheel, in that a value of the torque (M) is determined as a function of a first and of a second value of a yaw moment $T_{Reg}$, wherein the first value of the yaw moment is determined in the form of a value of the yaw moment which generates a setpoint value of a yaw rate on the basis of a vehicle reference model, and the second value of the yaw moment is determined as a function of a control error between the setpoint value of the yaw rate $\dot{\psi}_{ref}$ and an acquired actual value of the yaw rate $\dot{\psi}$ and also as a function of a control error between a setpoint value and an actual value of a further driving state variable (200$_N$) which is different from the yaw rate $\dot{\psi}$, **characterized in that** the determination of the torque M is activated as a function of a comparison between a control error of at least one driving state variable (200$_N$) and a predefined threshold value.

**2.** Method according to Claim 1, **characterized in that** the setpoint yaw rate $\dot{\psi}_{ref}$ is determined as a function of variables which are set by the driver.

**3.** Method according to one or both of Claims 1 and 2, **characterized in that** a coefficient $\mu$ of friction of a current underlying surface is included in the vehicle reference model.

**4.** Method according to one or more of the preceding claims, **characterized in that** a determination of the coefficient $\mu$ of friction is carried out.

**5.** Method according to one or more of the preceding claims, **characterized in that** the further driving state variable (200$_N$) is a slip angle $\alpha$ of at least one wheel of the vehicle.

**6.** Method according to one or more of the preceding claims, **characterized in that** the further driving state variable is a longitudinal slip $\lambda$ of at least one wheel of the vehicle.

**7.** Method according to one or more of the preceding claims, **characterized in that** the torque M is applied to the wheel only if a value of at least one driving state variable (200$_N$) exceeds a predefined first threshold value or does not drop below a second threshold value.

8. Device for regulating the driving dynamics of a vehicle, containing at least one actuator for controlling a clutch (110, 130, 145, 155, 150, 160) which transmits a torque to a wheel of the vehicle and/or at least one actuator for controlling a differential (105, 115) which distributes a torque to wheels of the vehicle, having

   a. a pilot control unit (420) which determines a first yaw moment which generates a set point yaw rate,
   b. a regulating unit (415) which determines a second yaw rate as a function of a control error between the setpoint yaw rate and an acquired actual yaw rate and also as a function of a control error between a setpoint value and an actual value of a further driving state variable which is different from a yaw rate,
   c. a control unit (230) which controls the actuators as a function of a torque M which is determined on the basis of the first and of the second yaw moment, and

   **characterized by** an activation logic which activates the control unit as a function of a comparison between a control error of at least one driving state variable ($200_N$) and a predefined threshold value.

**Revendications**

1. Procédé pour réguler la dynamique de déplacement d'un véhicule avec lequel au moins une roue du véhicule est soumise à un couple (M) du fait d'une commande d'un accouplement (110, 120, 125, 130, 145, 155) qui transmet un couple (225, 230) à la roue et/ou du fait d'une commande d'un différentiel (105, 115, 135, 140, 150) qui distribue un couple sur la roue et au moins sur une autre roue, qu'une valeur du couple (M) est déterminée en fonction d'un première et d'une deuxième valeur d'un couple de lacet T, la première valeur du couple de lacet étant déterminée au moyen d'un modèle de référence du véhicule sous la forme d'une valeur du couple de lacet produisant une valeur de consigne d'un taux de lacet et la deuxième valeur du couple de lacet étant déterminée en fonction d'un écart de régulation entre la valeur de consigne du taux de lacet $\dot{\psi}_{ref}$ et une valeur réelle acquise du taux de lacet $\dot{\psi}$ ainsi qu'en fonction d'un écart de régulation entre une valeur de consigne et une valeur réelle d'une autre grandeur de situation de déplacement ($200_N$) différente du taux de lacet $\dot{\psi}$, **caractérisé en ce que** la détermination du couple M est activée en fonction d'une comparaison entre un écart de régulation d'au moins une grandeur de situation de déplacement ($200_N$) et une valeur de seuil prédéfinie.

2. Procédé selon la revendication 1, **caractérisé en ce que** le taux de lacet de consigne $\dot{\psi}_{ref}$ est déterminé en fonction de grandeurs réglées par le conducteur.

3. Procédé selon l'une ou les deux revendications 1 et 2, **caractérisé en ce qu'**un coefficient de frottement $\mu$ d'un substrat courant intervient dans le modèle de référence du véhicule.

4. Procédé selon l'une ou plusieurs des revendications précédentes, **caractérisé en ce qu'**une détermination du coefficient de frottement $\mu$ est effectuée.

5. Procédé selon l'une ou plusieurs des revendications précédentes, **caractérisé en ce que** l'autre grandeur de situation de déplacement ($200_N$) est un angle de dérive $\alpha$ d'au moins une roue du véhicule.

6. Procédé selon l'une ou plusieurs des revendications précédentes, **caractérisé en ce que** l'autre grandeur de situation de déplacement est un glissement longitudinal $\lambda$ d'au moins une roue du véhicule.

7. Procédé selon l'une ou plusieurs des revendications précédentes, **caractérisé en ce que** la roue n'est soumise au couple M que lorsqu'une valeur d'au moins une grandeur de situation de déplacement ($200_N$) dépasse une première valeur de seuil prédéfinie ou ne devient pas inférieure à une deuxième valeur de seuil.

8. Dispositif pour réguler la dynamique de déplacement d'un véhicule, comprenant au moins un actionneur pour commander un accouplement (110, 130, 145, 155, 150, 160) qui transmet un couple à une roue du véhicule et/ou au moins un actionneur pour commander un différentiel (105, 115) qui distribue un couple sur les roues du véhicule, comprenant

   a. une unité de commande pilote (420) qui détermine un premier couple de lacet produisant un taux de lacet de consigne,

b. une unité de régulation (415) qui détermine un deuxième taux de lacet en fonction d'un écart de régulation entre le taux de lacet de consigne et un taux de lacet réel acquis ainsi qu'en fonction d'un écart de régulation entre une valeur de consigne et une valeur réelle d'une autre grandeur de situation de déplacement différente du taux de lacet,

c. une unité de commande (230) qui commande les actionneurs en fonction d'un couple M déterminé au moyen du premier et du deuxième couple de lacet et

**caractérisé par** une logique d'activation qui active l'unité de commande en fonction d'une comparaison entre un écart de régulation d'au moins une grandeur de situation de déplacement ($200_N$) et une valeur de seuil prédéfinie.

Fig. 1c

Fig. 1b

Fig. 1a

Fig. 2

Fig. 3

Fig. 4

Fig. 5

Fig. 6

Fig. 7

Fig. 8

Fig. 9

Fig. 10

Fig. 11a

Fig. 11b

Fig. 11c

**IN DER BESCHREIBUNG AUFGEFÜHRTE DOKUMENTE**

**In der Beschreibung aufgeführte Patentdokumente**

- DE 19800327 A1
- WO 0209965 A1
- EP 1162101 A
- WO 01081139 A1
- DE 10208815 A1